# EUROPÄISCHE PATENTSCHRIFT

(11) **EP 2 470 390 B1**
(45) Veröffentlichungstag und Bekanntmachung des Hinweises auf die Patenterteilung: **03.06.2015**
(21) Anmeldenummer: 10747188.0
(22) Anmeldetag: 24.08.2010
(51) Int. Cl.: B60K 6/20, B60K 6/52, B60K 1/04, B62D 21/00, B62D 21/04, B62D 65/04

(54) **KRAFTFAHRZEUG**
MOTOR VEHICLE
VÉHICULE À MOTEUR

(30) Priorität: 25.08.2009 DE 102009038834
(43) Veröffentlichungstag der Anmeldung: 04.07.2012
(73) Patentinhaber: Bayerische Motoren Werke Aktiengesellschaft, 80809 München (DE)
(72) Erfinder: GREIL, Juergen, 82237 Woerthsee (DE); WOLF, Peter, 83052 Bruckmuehl (DE)
(86) Internationale Anmeldenummer: PCT/EP2010/062306
(87) Internationale Veröffentlichungsnummer: WO 2011/023681

(56) Entgegenhaltungen:
- EP-A1- 0 678 441
- WO-A1-2009/114154
- DE-A1- 4 243 455
- US-A- 5 934 397
- US-A1- 2008 179 870

## Beschreibung

Die Erfindung betrifft ein Kraftfahrzeug mit einem Chassisrahmen. Derartige Kraftfahrzeuge sind beispielsweise aus der EP 0 868 338 B1, der EP 0 653 344 B1, der WO 01/64501 A1 und der AT 208 243 B bekannt. Bei den bekannten Kraftfahrzeugen kann der Fahrzeugaufbau separat vom Chassisrahmen hergestellt und in einfacher Weise im nachfolgenden Montageablauf mit dem Chassisrahmen verbunden werden.

Aus der US 2008/019870 A1 ist ein Kraftfahrzeug mit einem Chassisrahmen bekannt, der ein Frontmodul und ein Heckmodul aufweist, die über ein Zentralmodul miteinander verbunden sind. Das Zentralmodul nimmt wenigstens einen Speicher auf, aus dem ein Antriebsaggregat des Kraftfahrzeugs mit Energie gespeist wird Sowohl das Frontmodul als auch das Heckmodul tragen jeweils wenigstens ein Antriebsaggregat.

Aufgabe der Erfindung ist es, das bekannte Kraftfahrzeug weiterzubilden.

Diese Aufgabe wird durch ein Kraftfahrzeug mit den Merkmalen des Anspruchs 1 gelöst.

Dem erfindungsgemäßen Kraftfahrzeug liegt eine äußerst variable Fahrzeugarchitektur zugrunde, mit der ein breites Spektrum unterschiedlicher Arten von Kraftfahrzeugen realisiert werden kann, einschließlich verschiedener Antriebskonzepte für diese Kraftfahrzeuge. Die Bandbreite innerhalb einer zugrundeliegenden Fahrzeugarchitektur umfasst beispielsweise Sportwagen, Fahrzeuge der Limousinen-, Fließheck- und Kombinationsbauart, Kraftfahrzeuge, die im urbanen Bereich vornehmlich für Transportzwecke und Kurzstreckenbetrieb ausgelegt sind und auch Fahrzeuge mit größerer Bodenfreiheit. Hierbei spielt neben der augenfälligen Prägung des Kraftfahrzeugs durch den Fahrzeugaufbau auch die Auslegung des Chassisrahmens eine wichtige Rolle.

Die unterschiedlichen Arten von Kraftfahrzeugen und Antriebskonzepten können auf der Grundlage eines modular aufgebauten Chassisrahmens, der aus den drei Baugruppen Frontmodul, Zentralmodul und Heckmodul besteht, mit geringem Aufwand dargestellt werden. Vornehmlich wird hierbei die Breite von Front- und Heckmodul sowie die Breite und Länge des Zentralmoduls verändert. Somit kann aus einer gemeinsamen zugrundeliegenden Fahrzeugarchitektur dank des variablen Chassisrahmens eine Gruppe unterschiedlicher Fahrzeugarten, gegebenenfalls mit unterschiedlichen Antriebskonzepten, generiert werden, mit geringem konstruktivem und fertigungstechnischem Aufwand und damit mit niedrigen Herstellkosten.

Werden die quer zur Fahrtrichtung verlaufenden Bauteile des Frontmoduls und/oder des Heckmoduls von Strangprofilen, insbesondere Strangpressprofilen, von Blechbauteilen etc. gebildet, kann in einfacher Weise eine Breitenanpassung der beiden Module durch Ablängen der Strangprofile bzw. entsprechendes Abkanten und Beschneiden der Blechbauteile erfolgen. Die Tragstruktur von Frontmodul und Heckmodul weist in einer vorteilhaften Ausführungsform der Erfindung als wesentliche Bestandteile vergleichsweise großflächige Gussbauteile auf, die die Elemente der Vorder- und Hinterachse tragen und außerdem eine Reihe weiterer Bauteile und Aggregate aufnehmen können, wie beispielsweise Antriebsaggregate und deren Peripherie, Getriebe, Wärmetauscher etc. Ferner sind Anbindungen für einen vorderen bzw. hinteren Stoßfänger vorgesehen. Die Gussbauteile sind hauptsächlich im seitlichen Bereich von Front- und/oder Heckmodul vorgesehen. Der Gepäckraum kann entweder am Chassisrahmen oder am Fahrzeugaufbau ausgebildet sein. Durch die Breitenvariation von Front- und Heckmodul kann die Spurweite und/oder die Breite des Kraftfahrzeugs verändert werden.

Das Zentralmodul weist bevorzugt einen geschlossenen Querschnitt auf, um eine biege- und torsionssteife Verbindung von Frontmodul und Heckmodul zu gewährleisten. Veränderungen in der Länge des Zentralmoduls wirken sich auf den Radstand und/oder die Länge des Kraftfahrzeugs aus.

Die Verbindung zwischen Frontmodul bzw. Heckmodul einerseits und dem Zentralmodul andererseits erfolgt bevorzugt durch eine Schraub- und/oder Klebeverbindung. Auch eine Schweißverbindung ist denkbar. Die Art der verwendeten Fügetechnologie hängt unter anderem von dem beim betreffenden Fahrzeugkonzept verwendeten Werkstoff ab. Zur Erhöhung der Variabilität kann zwischen dem Zentralmodul und dem Frontmodul bzw. Heckmodul ein Verbindungsmodul nach Art eines "Adapters" vorgesehen sein, um unterschiedliche Arten von Kraftfahrzeugen noch einfacher in modularer Weise nach Art eines Baukastens darstellen zu können. Das Verbindungsmodul besteht beispielsweise aus einem Strangprofil, einem Gussknoten etc.

Chassisrahmen und Fahrzeugaufbau sind bevorzugt an wenigen definierten Stellen miteinander verbunden, beispielsweise durch eine Schraubverbindung. Selbstverständlich ist auch eine flächige Verbindung zwischen Chassisrahmen und Fahrzeugaufbau möglich, zum Beispiel durch Verklebung, gegebenenfalls mit zusätzlicher Verschraubung, oder durch Verschweißung.

Erfindungsgemäß ist das Kraftfahrzeug mit einem Elektromotor an der Vorderachse und einer Kombination aus Verbrennungsmotor und Elektromotor an der Hinterachse konfiguriert. So ergeben sich beispielsweise bei einem Verbrennungsmotor an der Hinterachse kurze Leitungen zum Kraftstofftank und zu den Schalldämpfern der Abgasanlage.

Weiterhin erfindungsgemäß ist das Frontmodul zur Anordnung eines oder mehrerer Wärmetauscher vorgesehen, beispielsweise für ein Heiz- und/oder Klimagerät für den Fahrzeuginnenraum, einen Kühlkreislauf für wenigstens ein Antriebsaggregat und/oder für eine Leistungselektronik und/oder für eine andere elektrische Baueinheit und/oder für eine elektrische Batterie. Insbesondere leistungsfähige Batterien, wie zum Beispiel Lithium-Polymer-Akkumulatoren, müssen ausreichend gekühlt werden.

Unter dem Begriff "Antriebsaggregat" ist in Zusammenhang mit der vorliegenden Erfindung jede Art von Aggregat zu verstehen, das dem Antrieb des Kraftfahrzeugs dient, wie beispielsweise Verbrennungsmotore, Elektromotore, Gasturbinen etc. Die Verbrennungsmotore können für unterschiedliche fossile, biologische und synthetische Kohlenwasserstoff-Kraftstoffe sowie für Wasserstoff-Kraftstoff ausgelegt sein.

Durch die Möglichkeit, die drei Baugruppen des Chassisrahmens innerhalb weiter Bereiche anzupassen zu können ist es in besonders vorteilhafter Weise möglich, Kraftfahrzeuge mit dem erfinderischen Antriebskonzept zu realisieren. Dem Zentralmodul kommt die Aufgabe der Speicherung eines Betriebsmediums zur Versorgung des wenigstens einen Antriebsaggregates zu. Das Zentralmodul kann hierzu in sehr variabler Weise ausgelegt werden und beispielsweise einen verhältnismäßig kleinen Tank für Benzin- oder Dieselkraftstoff, einen größeren Tank für Erdgas oder einen sehr voluminösen Tank für Wasserstoff aufnehmen. Auch elektrische Batterien können in kleinerer oder größerer Anzahl im Zentralmodul angeordnet werden. Hierzu kann die Breite und/oder die Länge und/oder die Höhe des Zentralmoduls variiert werden.

Antriebsaggregate können in Baueinheit mit einem Getriebe ausgeführt sein, wie beispielsweise ein Elektromotor in einem Getriebegehäuse als Bestandteil eines so genannten Hybridantriebs, der durch einen Verbrennungsmotor ergänzt wird. Durch das Vorhandensein von Elektromotoren kann das Kraftfahrzeug elektrisch angetrieben und somit ohne Emissionen durch einen Verbrennungsmotor betrieben werden. Zusätzlich oder alternativ kann wenigstens ein Elektromotor zur Unterstützung eines Verbrennungsmotors herangezogen werden.

Bei dem erfindungsgemäßen Kraftfahrzeug mit den Elektromotoren kann in Schubphasen und/oder beim Bremsen des Kraftfahrzeugs Energie rückgewonnen werden, indem wenigstens ein Elektromotor als Generator geschaltet wird. Die Rekuperation bei Einsatz des Elektromotors für Betriebsbremsungen liefert besonders hohe Ladeströme in die elektrische Batterie und mindert den Verschleiß der Komponenten der Reibungsbremse des Kraftfahrzeugs. Die Nutzung des Elektromotors als Betriebsbremse wirkt sich insbesondere bei erfindungsgemäßen Kraftfahrzeugen mit einem Elektromotor an der Vorderachse vorteilhaft aus, da bei Bremsvorgängen infolge der dynamischen Achslaständerung die Vorderachse stärker belastet wird und somit eine höhere Rekuperationsleistung erzielbar ist. Sind Elektromotore sowohl an der Vorder- als auch an der Hinterachse vorgesehen, kann in besonders wirkungsvoller Weise eine Rekuperation an beiden Fahrzeugachsen erfolgen.

Durch die vielfältigen Möglichkeiten der Anordnung eines Speichers für ein Betriebsmedium zur Versorgung wenigstens eines Antriebsaggregats im Zentralmodul geht im Unterschied zu konventionellen Kraftfahrzeugen kein Bauraum zu Lasten der Insassen oder des Gepäckraums verloren. Während beispielsweise bei bekannten Fahrzeugen mit Wasserstoff- oder Erdgasantrieb, die auf einer konventionellen Fahrzeugarchitektur für ein Kraftfahrzeug mit Benzin- oder Dieselmotor basieren, ein beträchtlicher Teil des Gepäckraumes für den Kraftstofftank zur Verfügung gestellt werden muss, kann das Betriebsmedium bei dem erfindungsgemäßen Kraftfahrzeug in vorteilhafter Weise im Zentralmodul untergebracht werden. Auch ist das Zentralmodul in idealer Weise in der Lage, elektrische Batterien mit einer großen Kapazität aufzunehmen, die bei bekannten Fahrzeugen wiederum beträchtlichen Bauraum im Innenraum und/oder im Gepäckraum beanspruchen. Die Batterien sind beispielsweise als Lithium-Polymer-Akkumutatoren ausgebildet. Hierbei wird bevorzugt eine größere Anzahl einzelner kleinerer Lithium-Polymer-Akkumulatoren zusammengeschaltet. Alternativ können auch Lithium-Ionen-Akkumulatoren oder andere Ausführungsformen von Akkumulatoren mit Lithium-Metalloxiden zum Einsatz kommen. Grundsätzlich kommen alle elektrischen Speicher in Betracht, die eine ausreichende volumetrische und gravimetrische Energiedichte aufweisen. Angestrebt werden hierbei eine volumetrische Energiedichte von mindestens 150Wh/dm³ und eine gravimetrische Energiedichte von mindestens 120Wh/kg.

Das Zentralmodul kann beispielsweise in Form eines Mitteltunnels ausgeführt sein. Bei einem derartigen relativ schmalen und hohen Zentralmodul ist eine tiefe Anordnung der Fahrzeugsitze zu beiden Seiten des Zentralmoduls möglich, so dass sich ein Kraftfahrzeug mit geringer Bauhöhe und niedrigem Schwerpunkt ergibt ("sportliche Ausprägung"). Alternativ kann das Zentralmodul auch über einen wesentlichen Teil der Breite des Kraftfahrzeugs reichen und in Form einer Tafel mit relativ geringer Höhe ausgebildet sein. Selbstverständlich kann die Höhe der Tafel auch größer ausfallen, wenn beispielsweise elektrische Batterien mit entsprechender Bauhöhe aufzunehmen sind. Bei der Auslegung des Zentralmoduls nach Art einer Tafel kann der Boden des zugehörigen Fahrzeugaufbaus weitestgehend flach ausgebildet werden ("urbane Ausprägung"). Hierdurch ergibt sich eine gegenüber der sportlichen Ausprägung vergleichsweise hohe Sitzposition. An dieser Stelle sei nochmals betont, dass beiden Arten von erfindungsgemäßen Kraftfahrzeugen dieselbe Fahrzeugarchitektur zugrunde liegt, mit gleichartig aufgebauten Front- und Heckmodulen, wobei die Anpassung in den Fahrzeugabmessungen und/oder die Fahrwerksabstimmung und/oder die Unterbringung unterschiedlicher Antriebsaggregate und/oder die Unterbringung unterschiedlicher Speicher für das Betriebsmedium durch geringe Abänderung von Front-, Zentral- und/oder Heckmodul ohne Weiteres und mit geringen Kosten realisierbar ist.

Wie bereits oben ausgeführt, können Frontmodul und/oder Heckmodul eine Vielzahl von Bauteilen und Aggregaten tragen. Es können am Frontmodul und/oder Heckmodul elektrische Komponenten, die zum Betrieb des Elektromotors erforderlich sind, angeordnet sein. Hierbei handelt es sich beispielsweise um eine Leistungselektronik zur Ansteuerung des Elektromotors, ein Ladegerät, einen DC/DC-Wandler, eine Verteilerbox oder dergleichen. Weist das Kraftfahrzeug erfindungsgemäß sowohl am Frontmodul als auch am Heckmodul einen Elektromotor auf, können die genannten elektrischen Komponenten an einem der beiden Module gebündelt werden.

Während das Bordnetz konventioneller Kraftfahrzeuge als Niedervoltnetz ausgelegt ist, arbeiten Kraftfahrzeuge mit einem Elektromotor als Antriebsaggregat in der Regel mit einer höheren Betriebsspannung. In einer vorteilhaften Ausführung der Erfindung ist das Hochspannung führende Leitungsnetz auf den Chassisrahmen beschränkt, so dass im Fahrzeugaufbau keine Hochspannung führenden Leitungen erforderlich sind.

Mögliche Ausführungsbeispiele der Erfindung sind in den Figuren dargestellt und werden nachfolgend näher erläutert. Es zeigt:
- Fig. 1: ein erstes Ausführungsbeispiel eines erfindungsgemäßen Kraftfahrzeugs in perspektivischer Darstellung,
- Fig. 2: ein zweites Ausführungsbeispiel eines erfindungsgemäßen Kraftfahrzeugs in perspektivischer Darstellung,
- Fig. 3: eine perspektivische Darstellung des Chassisrahmens der Kraftfahrzeuge von Fig. 1 und 2,
- Fig. 4: eine der Fig. 3 entsprechende Darstellung des Chassisrahmens, mit selektiver Darstellung von Aggregaten und Leitungen,
- Fig. 5: eine der Fig. 3 entsprechende Darstellung des Chassisrahmens, aus einem anderen Blickwinkel und
- Fig. 6: eine schematische Darstellung der Komponenten der Kraftfahrzeuge von Fig. 1 und 2.

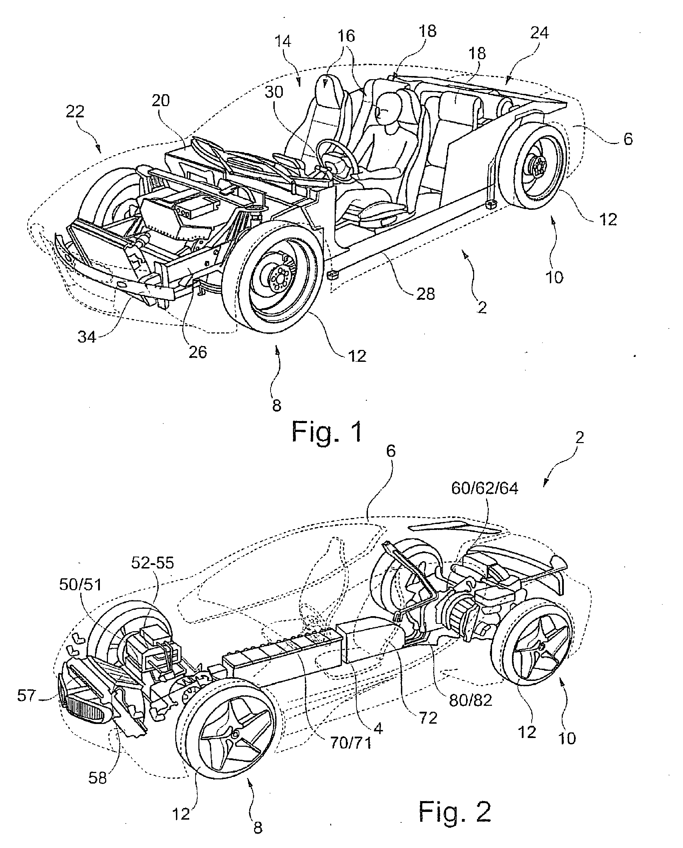

Ein erfindungsgemäßes Kraftfahrzeug 2 gemäß den Fig. 1 und 2 setzt sich im Wesentlichen aus einem in seiner Gesamtheit mit 4 bezeichneten Chassisrahmen und einem in seiner Gesamtheit mit 6 bezeichneten Fahrzeugaufbau zusammen.

Der aus Fig. 1 ersichtliche Fahrzeugaufbau 6 ist für ein Kraftfahrzeug 2 sportlicher Ausprägung nach Art eines so genannten "2+2-Sitzers" ausgelegt und weist in seinem Innenraum 14 zwei Vordersitze 16 sowie zwei Rücksitze 18 mit eingeschränktem Sitzkomfort auf. Eine Stirnwand 20 grenzt den Innenraum 14 gegenüber einem Motorraum 22 ab. Hinter den Rücksitzen 18 befindet sich ein Gepäckraum 24. Der Fahrzeugaufbau 6 weist eine Mehrzahl von Trägern auf, beispielsweise vordere Längsträger 26 und seitliche Längsträger 28. An der Stirnwand 20 ist eine Lenksäule 30 angeordnet.

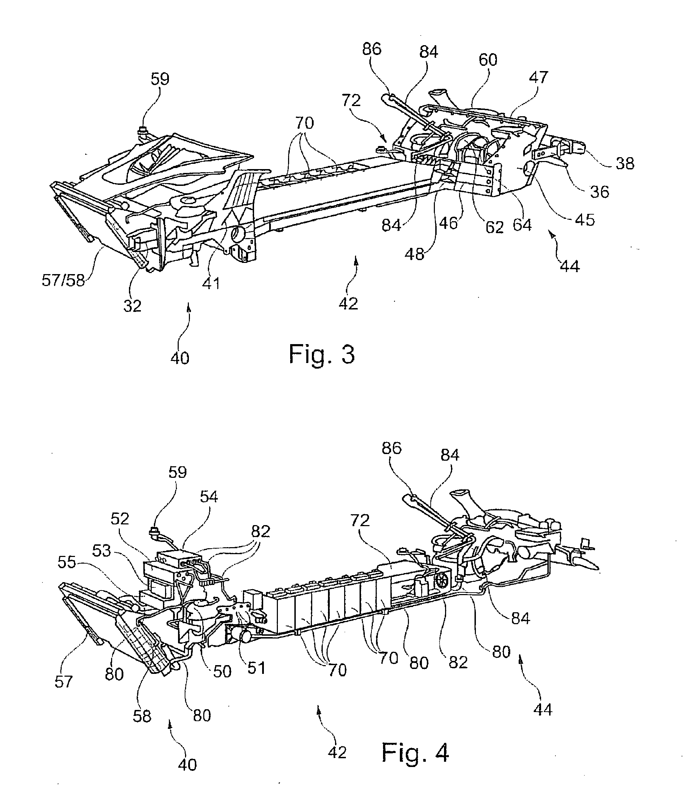

Fig. 2 zeigt ein zweites Ausführungsbeispiel eines erfindungsgemäßen Kraftfahrzeugs 2 mit einer stark nach aerodynamischen Gesichtspunkten gestalteten Außenhaut. Dem ersten Ausführungsbeispiel gemäß Fig. 1 entsprechenden Bestandteile des Kraftfahrzeugs 2 sind mit denselben Bezugszahlen bezeichnet wie in Fig. 1. Die weiteren mit Bezugszahlen gekennzeichneten Komponenten des Kraftfahrzeugs 2 sind nachfolgend in Zusammenhang mit den Fig. 3 bis 6 erläutert.

Der Chassisrahmen 4 nimmt unter anderem eine Vorderachse 8 und eine Hinterachse 10 auf, die in den Figuren nicht dargestellt sind. In den Fig. 1, 2 und 6 sind lediglich die Räder 12 von Vorder- und Hinterachse 8 bzw. 10 dargestellt. Die Räder 12 sind im Vergleich zu konventionellen Kraftfahrzeugen vergleichsweise schmal und hoch ausgebildet.

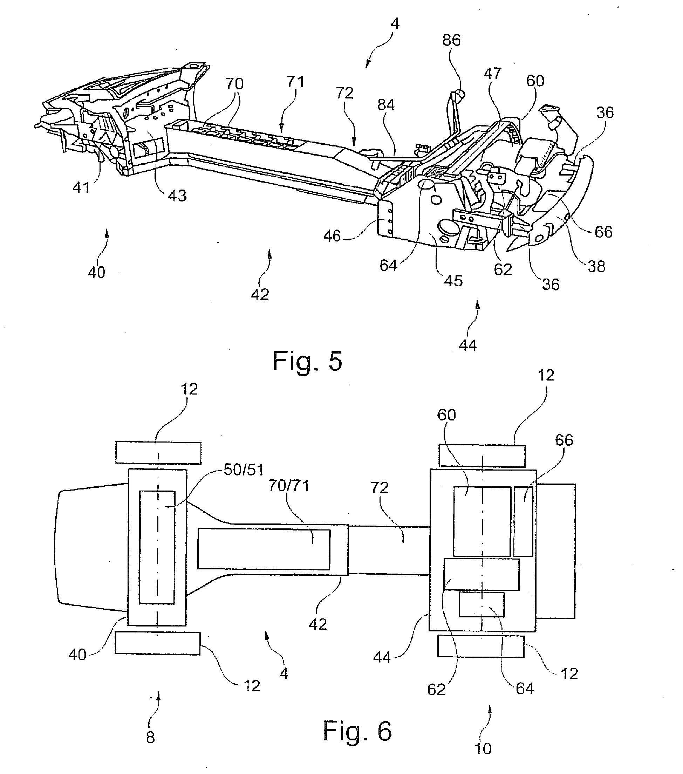

Der Chassisrahmen 4 besteht aus den drei Baugruppen Frontmodul 40, Zentralmodul 42 und Heckmodul 44. Das Zentralmodul 42 verbindet das Frontmodul 40 mit dem Heckmodul 44. Frontmodul 40 und Heckmodul 44 weisen eine Tragstruktur auf, die beispielsweise großflächige Gussbauteile 41 bzw. 45 aufweist, an denen unter anderem Komponenten der Vorder- und Hinterachse 8 bzw. 10, eine Motorlagerung, ein Lenkgetriebe etc. befestigt sind. Die Gussbauteile 41 und 45 von Frontmodul 40 bzw. Heckmodul 44 werden unter anderem durch Strangprofile 46 und 47 miteinander verbunden. Außerdem sind zwischen den seitlichen Gussbauteilen 41 und 45 Blechbauteile vorgesehen (siehe Blechbauteil 43 in Fig. 5). Frontmodul 40 und/oder Heckmodul 44 können auch - vollständig oder teilweise - als Schweißkonstruktion ausgeführt sein, vor allem bei Fahrzeugen, die höheren Belastungen ausgesetzt sind. Die Verbindung zwischen dem Zentralmodul 42 und den beiden Modulen 40 und 44 erfolgt bevorzugt durch Verschraubung. Hierbei ist beispielsweise zwischen dem Zentralmodul 42 und dem Heckmodul 44 ein knotenförmiges Verbindungsmodul 48 aus einem Gussmaterial vorgesehen. Dieses Verbindungsmodul 48 kann je nach Ausführung des Kraftfahrzeugs 2 unterschiedlich gestaltet sein.

Das Frontmodul 40 wird hauptsächlich von einem rechten und einem linken Gussbauteil 41 gebildet. Die beiden Gussbauteile 41 nehmen die Komponenten der Vorderachse, einen Elektromotor 50 sowie eine Vielzahl weiterer Komponenten auf. Auch sind an den beiden Gussbauteilen 41 Befestigungspunkte für den Fahrzeugaufbau 6 vorgesehen. Rechtes und linkes Gussbauteil 41 sind über mehrere in den Figuren nicht sichtbare, quer zur Fahrtrichtung verlaufende Strangprofile miteinander verbunden, ebenso wie durch das Blechbauteil 43 an dem dem Zentralmodul 42 zugewandten Endabschnitt des Frontmoduls 40. Die Breite des Frontmoduls 40 (und damit die vordere Spurbreite / Gesamtbreite des Kraftfahrzeugs 2) wird durch die Länge der Strangprofile und die Breite des Blechbauteils 43 bestimmt.

Am Frontmodul 40 ist, wie insbesondere aus Fig. 4 hervorgeht, der Elektromotor 50 mit einem Untersetzungsgetriebe 51, einer Leistungselektronik 52, einem Ladegerät 53, einer Verteilerbox 54 und einem DC/DC-Wandler 55 angeordnet. Eine Steckdose zum Anschluss des Ladegeräts ist mit 59 bezeichnet. Außerdem sind Wärmetauscher 57 und 58 vorgesehen. Der Elektromotor 50 treibt über das Untersetzungsgetriebe 51 die Vorderräder 12 an. Außerdem sind Deformationselemente 32 zur Anbindung eines vorderen Stoßfängers 34 (siehe Fig. 1) vorgesehen.

Das Heckmodul 44 besteht im Wesentlichen aus einem rechten und einem linken Gussbauteil 45, die unter anderem über Strangprofile 46 und 47 miteinander verbunden sind. Von besonderer Bedeutung für die Tragstruktur des Heckmodul 44 ist hierbei das Strangprofil 46 an der dem Zentralmodul 42 zugewandten Stirnseite des Heckmoduls 44. Außerdem ist in den Fig. 3 und 5 ein Strangprofil 47 an der Oberseite des Heckmoduls 44 erkennbar. An der Unterseite des Heckmoduls 44 sind die Gussbauteile 45 beispielsweise durch ein Blechbauteil miteinander verbunden. Die Breite des Heckmoduls 44 und damit die hintere Spurweite des Kraftfahrzeugs 2 wird durch die Länge der quer zur Fahrtrichtung verlaufenden Strangprofile 46 und 47 sowie durch die Dimensionierung des unterseitigen Blechbauteils bestimmt.

Das Heckmodul 44 trägt zwei Antriebsaggregate 60 und 62, in Form eines Verbrennungsmotors 60 und eines Elektromotors 62. Außerdem ist ein Getriebe 64, bevorzugt ein Doppelkupplungsgetriebe, zum Antrieb der Hinterräder 12 vorgesehen. Der Elektromotor 62 ist zwischen dem Verbrennungsmotor 60 und dem Getriebe 64 angeordnet. Der Verbrennungsmotor 60 ist beispielsweise als Dieselmotor ausgebildet. Im Schalldämpfer 66 der Abgasanlage des Verbrennungsmotors 60 ist ein thermoelektrischer Generator (TEG) angeordnet. Deformationselemente 36 binden einen hinteren Stoßfänger 38 an.

Das Zentralmodul 42 ist in Form eines Mitteltunnels ausgebildet und hat einen geschlossenen, etwa rechteckförmigen Querschnitt mit hoher Biege- und Torsionssteifigkeit. Die Länge des Zentralmoduls 42 bestimmt den Radstand und die Länge des Kraftfahrzeugs 2. In seinem Inneren nimmt das Zentralmodul 42 im vorderen und mittleren Bereich in einem Batteriefach 71 eine Mehrzahl von elektrischen Batterien 70 auf, die als Lithium-Polymer-Batterien ausgebildet sind. In seinem hinteren Bereich weist das Zentralmodul 42 einen Kraftstofftank 72 zur Aufnahme von Dieselkraftstoff auf.

Die Darstellung der Fig. 4 konzentriert sich auf elektrische Leitungen und Medienleitungen. Im Einzelnen handelt es sich hierbei um Kühlwasserschläuche 80, die die Wärmetauscher 57 und 58 mit den Antriebsaggregaten 50, 60 und 62 sowie mit der Leistungselektronik 52, mit dem DC/DC-Wandler 55 und mit dem Aufnahmeraum für die Batterien 70 verbinden. Ebenso sind Kühlwasserschläuche 80 zwischen den beiden Elektromotoren 50 und 62 einerseits und dem Verbrennungsmotor 60 andererseits vorgesehen, um bei elektrischem Betrieb des Kraftfahrzeugs 2 eine Vorwärmung des Verbrennungsmotors 60 zu erreichen, damit die Warmlaufphase des Verbrennungsmotors 60 verkürzt wird. Außerdem ist eine Vielzahl von Hochspannung führenden Leitungen 82 zwischen den Batterien 70, den elektrischen Komponenten 52 bis 55 und den beiden Elektromotoren 40 und 62 ersichtlich. Die Leitungen zwischen dem Kraftstofftank 72 und dem Tankeinfüllstutzen 86 sowie dem Antriebsaggregat 60 sind mit 84 bezeichnet. Die Konzentration der Leitungen 80, 82 und 84 auf den Chassisrahmen 4 vereinfacht den Aufbau und die Montage des erfindungsgemäßen Kraftfahrzeuges 2, indem der Chassisrahmen 4 als fahrfertige Einheit hergestellt werden kann, die nach ihrer Fertigstellung mit einem komplett vormontierten Fahrzeugaufbau 6 zusammengeführt wird. Außerdem kann im Bereich des Fahrzeugaufbaus 6 auf Hochspannung führende Leitungen 82 verzichtet werden.

Fig. 6 zeigt die einzelnen Komponenten des Chassisrahmens 4 in abstrahierter Darstellung. Auch wenn in Fig. 6 die dem Antrieb des Kraftfahrzeugs 2 dienenden Komponenten auf einem Chassisrahmen 4 angeordnet sind, der sich aus einem Frontmodul 40, einem Zentralmodul 42 und einem Heckmodul 44 zusammensetzt, ist es grundsätzlich ohne Weiteres möglich, diese dem Antrieb des Kraftfahrzeugs 2 dienenden Komponenten an einem konventionellen Fahrzeug zu gruppieren, mit den bereits oben beschriebenen Vorteilen hinsichtlich des Antriebs.

Frontmodul 40 und Heckmodul 44 tragen nicht näher dargestellte Bauteile einer Vorderachse 8 bzw. einer Hinterachse 10, mit vergleichsweise hohen und schmalen Rädern 12, die einen niedrigen Rollwiderstand ermöglichen. Die Räder 12 der Vorderachse 8 werden von einem Elektromotor 50 über ein beispielsweise eingängiges zweistufiges Untersetzungsgetriebe 51 angetrieben. Der Elektromotor 50 ist zum Beispiel als Hybridsynchronmotor ausgebildet. Die Räder 12 der Hinterachse 10 werden von einem Verbrennungsmotor 60 und/oder einem Elektromotor 62 über ein Getriebe 64 angetrieben. Die Komponenten 60, 62 und 64 bildet somit eine kompakte Hybrideinheit. Bei dem Verbrennungsmotor 60 handelt es sich beispielsweise um einen 3-Zylinder-Dieselmotor mit Turboaufladung. Das Getriebe 64 kann zum Beispiel als 6-gängiges, schnell schaltendes und verbrauchsoptimiert ausgelegtes Doppelkupplungsgetriebe ausgebildet sein.

Die Elektromotore 50 und/oder 62 werden von den im Batteriefach 71 untergebrachten Batterien 70 gespeist. Ein Kraftstofftank 72 versorgt den Verbrennungsmotor 60 mit Kraftstoff.

Der Antrieb des Kraftfahrzeugs 2 kann über ein einzelnes der Antriebsaggregate 50, 60 oder 62 erfolgen. Ebenso kann der Antrieb des Kraftfahrzeugs 2 auch von zwei oder von allen drei Antriebsaggregaten 50, 60 bzw. 62 gleichzeitig erfolgen, je nach Betriebszustand oder gewünschter Betriebsart. So ist ein rein elektrisches Fahren durch die Elektromotore 50 und/oder 62 möglich, durch Antrieb nur einer Achse 8 bzw. 10 oder durch "elektrischen Allradantrieb" an beiden Achsen 8 und 10. Lange Strecken werden bevorzugt vom Verbrennungsmotor 60 bewältigt. Beim Beschleunigen kann durch Addition der Leistung und Drehmomente von zwei oder allen drei Antriebsaggregaten 50, 60 bzw. 62 ein schnellerer Vortrieb erzeugt werden. Außerdem kann wenigstens einer der Elektromotore 50 und 62 im Schubbetrieb und/oder beim Abbremsen des Kraftfahrzeugs 2 als Generator geschaltet werden und elektrischen Strom in die Batterien 70 laden. Ein thermoelektrischer Generator im Schalldämpfer 66 der Abgasanlage des Kraftfahrzeugs 2 erzeugt ebenfalls elektrische Energie.

Zusammenfassend lässt sich die Erfindung wie folgt beschreiben: Ein erfindungsgemäßes Kraftfahrzeug 2 setzt sich aus einem Chassisrahmen 4 und einem Fahrzeugaufbau 6 zusammen. Der Chassisrahmen 6 wird von einem Frontmodul 40 und einem Heckmodul 44 gebildet, die über ein Zentralmodul 42 miteinander verbunden sind. Das Frontmodul 40 nimmt eine Vorderachse 8, Wärmetauscher 57 und 58 sowie ein Antriebsaggregat 50 in Form eines Elektromotors auf. Am Heckmodul 44 sind neben den Komponenten der Hinterachse 10 ein Verbrennungsmotor 60 sowie ein Elektromotor 62 vorgesehen. Das Zentralmodul 42 nimmt sowohl die elektrischen Batterien 70 zur Versorgung der beiden Elektromotore 50 und 62 als auch einen Kraftstofftank 72 für den Verbrennungsmotor 60 auf. Durch die beiden Elektromotore 50 und 62 an Vorder-und Hinterachse 8 bzw. 10 kann in einfacher Weise ein "elektrischer Allradantrieb" realisiert werden.

Die Erfindung stellt in vorteilhafter Weise eine universelle Fahrzeugarchitektur bereit, die es ermöglicht, mehrere Arten unterschiedlicher Kraftfahrzeuge 2 serienmäßig herzustellen. Diese Gruppe verschiedener Kraftfahrzeuge 2 baut auf einem einheitlichen modularen Chassisrahmen 4 mit den drei Baugruppen Frontmodul 40, Zentralmodul 42 und Heckmodul 44 auf, wobei die einzelnen Arten von Kraftfahrzeugen 2 dennoch ein unterschiedliches äußeres Erscheinungsbild haben können. Frontmodul 40, Zentralmodul 42 und Heckmodul 44 der universellen Fahrzeugarchitektur weisen jeweils wenigstens ein Bauteil auf, dessen Länge und/oder Breite und/oder Höhe in einfacher Weise veränderbar ist, beispielsweise ablängbare Strangprofile 46 und 47.

## Patentansprüche

1. Kraftfahrzeug (2) mit einem Chassisrahmen (4), der ein Frontmodul (40) und ein Heckmodul (44) aufweist, die über ein Zentralmodul (42) miteinander verbunden sind, das wenigstens einen Speicher (70, 72) aufnimmt, aus dem ein Antriebsaggregat (50, 60, 62) des Kraftfahrzeugs (2) mit Energie gespeist wird, wobei sowohl das Frontmodul (40) als auch das Heckmodul (44) jeweils wenigstens ein Antriebsaggregat (50, 60, 62) tragen,
**dadurch gekennzeichnet, dass** das Frontmodul (40) einen Elektromotor (50) und das Heckmodul (44) eine Kombination aus Verbrennungsmotor (60) und Elektromotor (62) trägt, wobei das Frontmodul (40) wenigstens einen Wärmetauscher (58) für die Antriebsaggregate (50, 60, 62) und/oder eine Leistungselektronik (52) und/oder weitere elektrische Komponenten (53 bis 55) und/oder ein Heizgerät und/oder ein Klimagerät aufweist.

2. Kraftfahrzeug nach Anspruch 1,
**dadurch gekennzeichnet, dass** das Zentralmodul (42) nach Art eines Mitteltunnels ausgeführt ist.

3. Kraftfahrzeug nach Anspruch 1,
**dadurch gekennzeichnet, dass** das Zentralmodul (42) nach Art einer sich über einen wesentlichen Teil der Breite des Kraftfahrzeugs (2) erstreckenden Tafel ausgeführt ist.

4. Kraftfahrzeug nach einem der vorangegangenen Ansprüche,
**dadurch gekennzeichnet, dass** das Zentralmodul (42) einen geschlossenen Querschnitt aufweist.

5. Kraftfahrzeug nach einem der vorangegangenen Ansprüche,
**dadurch gekennzeichnet, dass** das Front- und/oder das Heckmodul (40; 44) ein rechtes und ein linkes Gussbauteil (41; 45) aufweisen, die durch wenigstens ein quer zur Fahrtrichtung verlaufendes Bauteil (43; 46; 47) miteinander verbunden sind, das je nach Art des Kraftfahrzeugs (2) eine unterschiedliche Länge aufweisen kann.

6. Kraftfahrzeug nach einem der vorangegangenen Ansprüche,
**dadurch gekennzeichnet, dass** zwischen dem Zentralmodul (42) und dem Front- bzw. Heckmodul (40; 44) wenigstens ein separates Verbindungsmodul (48) vorgesehen ist.

7. Kraftfahrzeug nach einem der vorangegangenen Ansprüche,
**dadurch gekennzeichnet, dass** der Verbrennungsmotor einen Generator zum Laden einer elektrischen Batterie antreibt.

8. Kraftfahrzeug nach einem der vorangegangenen Ansprüche,
**dadurch gekennzeichnet, dass** der Chassisrahmen (4) die Hochspannung führenden Leitungen (82) des Kraftfahrzeugs (2) aufnimmt.

## Claims

1. A motor vehicle (2) comprising a chassis frame (4) having a front module (40) connected to a rear module (44) by a central module (42) which holds at least one reservoir (70, 72) for energising a drive unit (50, 60, 62) of the vehicle (2), wherein both the front module (40) and the rear module (44) each carry at least one drive unit (50, 60, 62),
**characterised in that** the front module (40) carries an electric motor (50) and the rear module (44) carries an internal combustion engine (60) combined with an electric motor (62), wherein the front module (40) comprises at least one heat exchanger (58) for the drive units (50, 60, 62) and/or an electronic power unit (52) and/or other electric components (53 to 55) and/or a heating unit and/or an air-conditioning unit.

2. A vehicle according to claim 1,
**characterised in that** the central module (42) is in the form of a central tunnel.

3. A vehicle according to claim 1,
**characterised in that** the central module (42) is in the form of a plate extending over a considerable part of the width of the vehicle (2).

4. A vehicle according to any of the preceding claims, **characterised in that** the central module (42) has a closed cross-section.

5. A vehicle according to any of the preceding claims, **characterised in that** the front module (40) and/or the rear module (44) comprise a right and a left cast component (41; 45) which are connected by at least one component (43; 46, 47) extending transversely of the direction of travel, and having a length which can vary with the type of vehicle (2).

6. A vehicle according to any of the preceding claims, **characterised in that** at least one separate connecting module (48) is provided between the central module (42) and the front module (40) or rear module (44).

7. A vehicle according to any of the preceding claims, **characterised in that** the engine drives a generator for charging a battery.

8. A vehicle according to any of the preceding claims, **characterised in that** the chassis frame (4) holds the high voltage leads (82) of the vehicle (2).

## Revendications

1. Véhicule à moteur (2) comprenant un cadre-châssis (4) qui comporte un module frontal (40) et un module arrière (44) qui sont reliés par l'intermédiaire d'un module central (42) qui reçoit au moins un accumulateur (70, 72) à partir duquel l'unité d'entrainement (50, 60, 62) du véhicule (2) est alimentée en énergie, dans lequel le module frontal (40) ainsi que le module arrière (44) portent respectivement au moins une unité d'entrainement (50, 60, 62),
**caractérisé en ce que**
le module frontal (40) porte un moteur électrique (50) tandis que le module arrière (44) porte la combinaison d'un moteur à combustion interne (60) et d'un moteur électrique (62), le module frontal (40) comportant au moins un échangeur de chaleur (58) pour l'unité d'entrainement (50, 60, 62) et/ou une électronique de puissance (52) et/ou d'autres composants électriques (53 à 55) et/ou un appareil de chauffage et/ou un appareil de climatisation.

2. Véhicule à moteur conforme à la revendication 1,
**caractérisé en ce que**
le module central (42) est réalisé sous la forme d'un tunnel médian.

3. Véhicule à moteur conforme à la revendication 1,
**caractérisé en ce que**
le module central (42) est réalisé sous la forme d'une tablette s'étendant sur une partie importante de la largeur du véhicule (2).

4. Véhicule à moteur conforme à l'une des revendications précédentes,
**caractérisé en ce que**
le module central (42) présente une section fermée.

5. Véhicule à moteur conforme à l'une des revendications précédentes,
**caractérisé en ce que**
le module frontal et/ou le module arrière (40, 44) comporte(nt) un composant de fonderie droit et gauche (41, 45) qui sont reliés par un composant (43, 46, 47) s'étendant transversalement à la direction de déplacement, qui, selon le type de véhicule (2) peut présenter différentes longueurs.

6. Véhicule à moteur conforme à l'une des revendications précédentes,
**caractérisé en ce que**
entre le module central (42) et le module frontal ou le module arrière (40, 44) est prévu au moins un module de liaison indépendant (48).

7. Véhicule à moteur conforme à l'une des revendications précédentes,
**caractérisé en ce que**
le moteur à combustion interne entraine un générateur pour permettre de charger une batterie électrique.

8. Véhicule à moteur conforme à l'une des revendications précédentes,
**caractérisé en ce que**
le cadre-châssis (4) reçoit des conduites (82) du véhicule à moteur (2) conduisant la haute tension.
